# EUROPÄISCHE PATENTSCHRIFT

(11) **EP 0 744 403 B1**
(45) Veröffentlichungstag und Bekanntmachung des Hinweises auf die Patenterteilung: **18.10.2000**
(21) Anmeldenummer: 96107624.7
(22) Anmeldetag: 14.05.1996
(51) Int. Cl.: C07F 9/38, C07F 9/40

(54) **Verfahren zur Herstellung von 2-Phosphonobutan-1,2,4-tricarbonsäure und ihrer Alkalimetallsalze**
Process for the preparation of 2-phosphonobutane-1,2,4-tricarboxylic acids and their alkaline metal salts
Procédé de préparation d'acides 2-phosphonobutane-1,2,4-tricarboxyliques et leurs sels de métaux alcalins

(30) Priorität: 26.05.1995 DE 19519318
(43) Veröffentlichungstag der Anmeldung: 27.11.1996
(73) Patentinhaber: BAYER AG, 51368 Leverkusen (DE)
(72) Erfinder: Holzner, Christoph, Dr., 51061 Köln (DE); Ohlendorf, Wolfgang, Dr., 51373 Leverkusen (DE); Block, Hans-Dieter, Dr., 51381 Leverkusen (DE); Bertram, Horst, Dr., 51107 Köln (DE); Kleinstück, Roland, Dr., 51467 Bergisch Gladbach (DE); Moretto, Hans-Heinrich, Prof. Dr., 51375 Leverkusen (DE)

(56) Entgegenhaltungen:
- EP-A- 0 356 880
- EP-A- 0 358 022
- DE-A- 2 061 838

## Beschreibung

Die Erfindung betrifft ein verbessertes Verfahren zur Herstellung von 2-Phosphonobutan-1,2,4-tricarbonsäure (PBTC) und ihrer Alkalimetallsalze, bei dem zunächst Dialkylphosphit, bevorzugt Dimethyl- oder Diethylphosphit, und Ethen-1,2-dicarbonsäuredialkylester, insbesondere die Dimethyl- bzw. Diethylester von Maleinsäure und/oder Fumarsäure, in Gegenwart eines basischen Katalysators zu Phosphonobernsteinsäuretetraalkylester umgesetzt werden, der so erhaltene Ester daraufhin ohne weitere Aufarbeitung mit Acrylsäurealkylester, bevorzugt Acrylsäuremethyl- oder Acrylsäureethylester, in Gegenwart eines alkalischen Katalysators zur Reaktion gebracht wird und das so gewonnene Reaktionsprodukt ohne weitere Aufarbeitung zu PBTC oder ihren Alkalimetallsalzen verseift wird.

Bereits früher wurde gefunden, daß aus Dialkylphosphit und Maleinsäure- bzw. Fumarsäuredialkylester in Gegenwart von Alkalialkoholaten in einer Additionsreaktion vom Michael-Typ Phosphonobernsteinsäuretetraalkylester darstellbar sind (A.N. Pudovik, Bull. acad. sci. US.S.R., Classe sci. chim. 1952, S. 821-824). Die so hergestellten Tetramethyl- bzw. Tetraethylester der Phosphonobernsteinsäure werden durch Destillation gereinigt und in Ausbeuten von ca. 80 % erhalten.

Die DE-A 2 061 838 beschreibt die Synthese von 2-Phosphonobutan-1,2,4-tricarbonsäure durch Reaktion äquimolarer Mengen Phosphonobernsteinsäuretetramethylester mit Acrylsäuremethylester bzw. Acrylnitril in Gegenwart von 100-150 mmol/mol Natriummethanolat als Katalysator und anschließende Hydrolyse mit verdünnter Salzsäure. Bei diesem Verfahren wird destillierter Phosphonobernsteinsäuretetramethylester eingesetzt und das Zwischenprodukt 2-Phosphonobutan-1,2,4-tricarbonsäurepentamethylester bzw. 2-Dimethylphosphono-4-nitrilo-butan-1,2-dicarbonsäuredimethylester vor der Verseifung von flüchtigen Nebenprodukten im Vakuum bei 80-90°C befreit.

Auch andere, den Stand der Technik bildende Verseifungsverfahren von 2-Phosphonobutan-1,2,4-tricarbonsäurepentamethylester, wie die Hydrolyse ohne Zusatz von systemfremden Verseifungskatalysatoren (DE-A 2 229 087) sowie die Hydrolyse unter Druck (DE-A 2 745 982), gehen im Regelfall von vorgereinigten Edukten aus.

Nachteile bei den vorgenannten Darstellungsmethoden von 2-Phosphonobutan-1,2,4-tricarbonsäure bestehen darin, daß eine Reinigung des Phosphonobernsteinsäuretetraalkylesters durch Destillation notwendig ist, da die vorausgehende Synthese nur stark verunreinigtes Produkt liefert. Ebenso ist es nach den vorgenannten Verfahren notwendig, vor der Verseifung von 2-Phosphonobutan-1,2,4-tricarbonsäurepentaalkylester zur Reinigung des Produktes die leicht flüchtigen Substanzen unter Vakuum bei einer Sumpftemperatur bis zu 100°C abzudestillieren.

EP-A 358 022 beschreibt dagegen ein Verfahren, das unter Vermeidung der genannten Nachteile, insbesondere der Zwischenreinigung, die Herstellung von 2-Phosphonobutan-1,2,4-tricarbonsäure (PBTC, technisch) oder ihrer Alkalimetallsalze in einem technisch vorteilhaften, kontinuierlichen Prozeß gestattet. Nachteil hierbei ist jedoch, daß das Produkt (PBTC, technisch) bei der Anwendung als Komponente in Bleichlauge-haltigen Reinigern einen gewissen Anteil der Bleichlauge zersetzt ("Chlorzehrung"). Dieser Nachteil haftet auch den Produkten an, die nach den Verfahren von Pudovik (s.o.) sowie nach dem Verfahren der DE-A 2 061 838 hergestellt werden, sowohl wenn eine Zwischenreinigung auf der Stufe des Phosphonobernsteinsäureesters vorgenommen wird als auch wenn auf eine solche Zwischenreinigung verzichtet wird, und zwar quantitativ in einem stärkeren Maße als den nach EP-A 358 022 hergestellten Produkten.

Aufgabe war es, ein Verfahren zur Verfügung zu stellen, welches die Vorteile der bisher bekannten Verfahren aufweist, welches es aber gleichzeitig gestattet, ein Produkt zu erzeugen, welches keine oder weniger Chlorzehrung bei der genannten Anwendung aufweist.

Diese Aufgabe konnte nun überraschenderweise dadurch gelöst werden, daß bei der Synthese von 2-Phosphonobutan-1,2,4-tricarbonsäure und ihrer Salze die Umsetzung von Phosphonobernsteinsäuretetraalkylester mit Acrylsäurealkylester ansatzweise (batchweise) und nicht kontinuierlich durchgeführt wird und ganz bestimmte erfindungsgemäße Mengenbereiche der Ausgangsstoffe und sonstigen Hilfsmittel sowie ganz bestimmte erfindungsgemäße Temperaturbereiche eingehalten werden.

Gegenstand der Erfindung ist ein Verfahren zur Herstellung von 2-Phosphonobutan-1,2,4-tricarbonsäure (PBTC) oder ihrer Alkalimetallsalze durch Umsetzung von Phosphorigsäuredialkylester mit Ethen-1,2-dicarbonsäuredialkylester, worin die Alkylgruppen in den beiden Stoffgruppen jeweils unabhängig voneinander Methyl- oder Ethylgruppen sind, im Molverhältnis 1:1 bis 1:1,1, bevorzugt 1:1,03 bis 1:1,07, in Gegenwart von 5 bis 50 mmol, bevorzugt 10 bis 40 mmol Alkalimetallmethylat oder - ethylat jeweils bezogen auf 1 mol eingesetzten Phosphorigsäuredialkylester zu Phosphonobernsteinsäuretetraalkylester und anschließende Umsetzung des so erhaltenen Reaktionsproduktes ohne Aufarbeitungs- oder Reinigungsschritt in einem zweiten Schritt bei Temperaturen von -20°C bis +50°C, vorzugsweise von O°C bis +25°C mit 0,9-1,1 mol,bevorzugt 1-1,07 mol, Acrylsäurealkylester, worin die Alkylgruppen Methyl- oder Ethylgruppen sind, in Gegenwart von Alkalimetallmethylat oder -ethylat als Katalysator und unter Zusatz von Methanol oder Ethanol zu 2-Phosphonobutan-1,2,4-tricarbonsäurepentaalkylester, worin die Alkylgruppen Methyl- oder Ethylgruppen sind, und Umsetzung des so erhaltenen Reaktionsproduktes ohne weitere Aufarbeitung mittels saurer Hydrolyse, vorzugsweise mit einer durch PBTC katalysierten Hydrolyse, bei 100 bis 150°C, vorzugsweise bei 105-130°C, welches dadurch gekennzeichnet ist, daß der zweite Reaktionsschritt, bestehend in der Umsetzung von Phosphonobernsteinsäuretetraalkylester mit Acrylsäurealkylester, ansatzweise (batchweise) in Gegenwart von 1-2 mol, bevorzugt ca. 1,5 mol, Methanol oder Ethanol mit einer Verweilzeit von > 500 min, vorzugsweise > 700 min, ausgeführt wird.

Die dem zweiten Reaktionsschritt, also der ansatzweise auszuführenden Umsetzung von Phosphonobernsteinsäuretetraalkylester mit Acrylsäurealkylester, vorangehenden und nachfolgenden Reaktionsschritte können sowohl ansatzweise als auch kontinuierlich ausgeführt werden.

Die oben erwähnte Chlorzehrung ist für die Praxis von Bedeutung, da PBTC, technisch unter dem Handelsnamen "BAYHIBIT® AM" (Handelsprodukt der Bayer AG) breiten Einsatz in Bleichlauge-haltigen Industriereinigern gefunden hat. 2-Phosphonobutan-1,2,4-tricarbonsäure für sich genommen ist nämlich - anders als die ebenfalls im technischen Maßstab als Sequestriermittel und Inkrustationsinhibitor eingesetzten Phosphonate Amino-tris-methylenphosphonsäure (ATMP) und 1-Hydroxy-ethan-1,1-diphosphonsäure (HEDP) - gegenüber Bleichlauge stabil.

Die beobachtete Chlorzehrung wird daher auf im technischen PBTC in geringen Mengen enthaltenen Verunreinigungen zurückgeführt. Beispielsweise wurden in einem Reiniger aus 50 % technischer Bleichlauge mit 13,4 % Cl₂, 10 % 50 %iger Natronlauge und 4 % BAYHIBIT® AM (technisches PBTC) nach dem Mischen nicht die rechnerisch zu erwartenden 6,7 %, sondern nur 6,4 % Chlor bestimmt. Die Chlorzehrung betrug hier also 0,3 %.

Die Eigenschaft, im alkalischen Medium Chlor zu verbrauchen (Chlorzehrung), wird auch durch eine Destillation weder auf der Stufe des Phosphonobernsteinsäuretetraalkylesters noch auf der Stufe des 2-Phosphonobutan-1,2,4-tricarbonsäurepentaalkylesters, wie sie in den älteren, zuvor zitierten Arbeiten unter erheblichem Aufwand zur Reinigung des Produktes ausgeführt wurden, nicht positiv im Sinne einer Minderung der Chlorzehrung beeinflußt. Diese Tatsache wird durch die Vergleichsbeispiele belegt.

Überraschenderweise zeichnet sich das erfindungsgemäß erhaltene Produkt 2-Phosphonobutan-1,2,4-tricarbonsäure durch eine drastisch verminderte Chlorzehrung aus, die den Produkten aus den bisher bekannten Verfahrensweisen sowohl mit destillativer Reinigung in den Zwischenstufen wie den Produkten aus den kontinuierlichen Synthesen (siehe Vergleichsbeispiel 3) überlegen ist, ohne Nachteile bei der härtestabilisierenden Wirksamkeit aufzuweisen.

Das erfindungsgemäße Verfahren ermöglicht es, in technisch einfacher Weise ohne Bildung unerwünschter Nebenprodukte und ohne Einsatz überschüssiger Reaktionspartner oder wieder zu entfernender Hilfsstoffe die gewünschten Produkte, 2-Phosphonobutan-1,2,4-tricarbonsäure oder ihre Alkalimetallsalze, in guten Ausbeuten und erhöhter Qualität zu erhalten. Das erfindungsgemäße Verfahren ermöglicht eine technisch einfache Synthese von qualitativ hochwertigen 2-Phosphonobutan-1,2,4-tricarbonsäure ohne Destillationsschritte zwischen den einzelnen Synthesestufen.

Es steht damit ein Verfahren zur Verfügung, das es erlaubt, PBTC bzw. ihre Salze, die bereits unter dem Handelsnamen Bayhibit® als technisches Produkt eine sehr verbreitete Anwendung gefunden haben (z.B. als Stein- und Korrosionsinhibitor bei der Kühlwasserbehandlung, als Inkrustationsinhibitor in Industriereinigern, als Sequestrier- und Dispersionsmittel) auf einfache Weise derart herzustellen, daß beim Einsatz zusammen mit Bleichlauge die Chlorzehrung stark reduziert ist.

Das erfindungsgemäße Verfahren soll anhand der nachfolgenden Beispiele näher erläutert werden.

### Beispiel 1 (erfindungsgemäß)

### Herstellung von 2-Phosphonobutan-1,2,4-tricarbonsäure

Zu einer Mischung von 508 g (2 mol) Phosphonobernsteinsäuretetramethylester und 189,2 g (2,2 mol) Acrylsäuremethylester wird unter Rühren und intensiver Kühlung bei 12°C eine Mischung aus 6,81 g 25 %iger methanolischer Natriummethylatlösung (entsprechend 31,5 mmol Natriummethylat) und 92,43 g Methanol innerhalb von 20 Minuten zugetropft. Anschließend wird insgesamt 48 Std. bei 12°C nachgerührt.

Die Reaktionsmischung wird nach 48 Stunden mit 1000 ml 22 %iger Salzsäure 96 Std. am Rückfluß verseift. Anschließend werden Salzsäure und Wasser bei 16 mbar so lange abdestilliert, bis die Konzentration der im Sumpf vorliegenden 2-Phosphonobutan-1,2,4-tricarbonsäure (PBTC) auf 50 % angestiegen ist (Bestimmung der Konzentration über potentiometrische Titration mit Natronlauge).

Ein ³¹P-NMR-Spektrum des Rückstandes zeigt die Signale von Phosphonobernsteinsäure (PBS), 2-Phosphonobutan-1,2,4-tricarbonsäuremonomethylester (MM-PBTC) 2-Phosphonobutan-1,2,4-tricarbonsäure (PBTC) und von Phosphat mit folgenden Signalintensitäten (Flächen-%):

| | |
|---|---|
| PBS | 3,6 % |
| MM-PBTC | 0,2 % |
| PBTC | 95,8 % |
| Phosphate | 0,3 % |

Die Gardner-Farbzahl (gemäß DIN 53 995) beträgt < 1. Die entsprechend nachfolgender Vorschrift ermittelte Chlorzehrung beträgt 8 mg Chlor pro 1 g der 50 %igen Lösung.

### Meßverfahren für die Chlorzehrung

1. Herstellung eines desinfizierenden Reinigers I:
   Komponenten
   - 370 g: Wasser (aqua dem.)
   - 30 g: PBTC-Lösung 50 %ig
   - 100 g: Natronlauge 50 %ig
   - 500 g: Bleichlauge tech. (13-14 % Cl₂)

   Aus den obengenannten Komponenten wird auf folgende Weise ein Reiniger I hergestellt:
   Man legt in einem 2-l-Becherglas das Wasser vor und gibt unter gutem Rühren die PBTC-Lösung und danach die Natronlauge langsam zu.
   Nach vollständiger Durchmischung wird, wieder unter Rühren, langsam die Bleichlauge zugesetzt.
2. Herstellung eines Reinigers II:
   Gleichzeitig wird ein Reiniger II analog Reiniger I hergestellt, bei dem an Stelle der PBTC-Lösung zusätzlich 30 g Wasser eingesetzt werden.
3. Ermittlung der Chlorzehrung
   Nach einer Standzeit der Reiniger von etwa 2 Stunden kann die Chlorzehrung bestimmt werden.
   In den Reinigern I und II wird der Gehalt an Aktivchlor durch potentiometrische Titration mit arseniger Säure bestimmt. Die Chlorzehrung im Reiniger I ergibt sich aus dem Aktivchlorgehalt in Reiniger II, vermindert um den Aktivchlorgehalt in Reiniger I.
   Bezieht man die Chlorzehrung in einem Reiniger auf die Einsatzkonzentration an PBTC (50 %ig), so erhält man die Chlorzehrung von PBTC, z.B. als mg Chlor pro 1 g PBTC (50 %ig).

### Beispiel 2 (erfindungsgemäß)

### Herstellung von 2-Phosphonobutan-1,2,4-tricarbonsäure

Zu einer Mischung von 254 g (1 mol) Phosphonobernsteinsäuretetramethylester und 86 g (1 mol) Acrylsäuremethylester werden unter Rühren und intensiver Kühlung bei 12°C eine Mischung aus 5,56 g 25 %iger methanolischer Natriummethylatlösung (entspr. 25,7 mmol Methylat) und 44,28 g Methanol innerhalb von 15 Minuten zugetropft. Anschließend wird ingesamt 48 Stunden bei 12°C nachgerührt. Danach wird der Ansatz mit 975 g 22 %iger Salzsäure 96 Std. am Rückfluß verseift. Anschließend wird am Rotationsverdampfer bis zur 50 %-igen PBTC-Lösung eingeengt.

Ein ³¹P-NMR-Spektrum des Rückstandes zeigt die Signale von Phosphonobernsteinsäure (PBS), 2-Phosphonobutan-1,2,4-tricarbonsäuremonomethylester (MM-PBTC), 2-Phosphonobutan-1,2,4-tricarbonsäure (PBTC) und von Phosphat mit folgenden Signalintensitäten (Flächen-%):

| | |
|---|---|
| PBS | 6,3 % |
| MM-PBTC | 0,2 % |
| PBTC | 93,1 % |
| Phosphat | 0,3 % |

Die Gardner-Farbzahl beträgt < 1. Die Chlorzehrung wird zu 20 mg Chlor pro 1 g der 50 %igen Lösung bestimmt.

### Vergleichsbeispiel 1

### Ansatzweise Herstellung von 2-Phosphonobutan-1,2,4-tricarbonsäure nach DE-A 20 61 838 mit Destillation des 2-Phosphonobutan-1,2,4-tricarbonsäurepentamethylesters

Zu einer Mischung von 508 g (2 mol) destilliertem Phosphonobernsteinsäuretetramethylester und 172 g (2 mol) Acrylsäuremethylester werden unter Rühren und intensiver Kühlung bei 12 bis 14°C 64,8 g 25 %-ige methanolische Natriummethylatlösung, verdünnt mit 30,5 g Methanol (entspr. 0,3 mol Natriummethylat in 100 ml Methanol), innerhalb von 70 Minuten zugetropft. Das Methanol wird im Vakuum (16 mbar) bis zu einer Sumpftemperatur von 80°C abdestilliert. Anschließend wird der 2-Phosphonobutan-1,2,4-tricarbonsäurepentamethylester im Vakuum (ca. 1 mbar) bis 200°C destilliert.

Das Destillat (459 g) wird mit 1148 g 22 %-iger Salzsäure 96 Std. unter Rückfluß gekocht. Nach dem Abkühlen werden Salzsäure und Wasser abdestilliert, bis eine 50 %-ige PBTC-Lösung resultiert.

Ein ³¹P-NMR-Spektrum des Rückstandes zeigt die Signale von Phosphonobernsteinsäure (PBS), 2-Phosphonobutan-1,2,4-tricarbonsäuremonomethylester (MM-PBTC) 2-Phosphonobutan-1,2,4-tricarbonsäure (PBTC) und von Phosphat mit folgenden Signalintensitäten (Flächen-%):

| | |
|---|---|
| PBS | 6,1 % |
| MM-PBTC | 0,7 % |
| PBTC | 90,8 % |
| Phosphate | 2,4 % |

Die Gardner-Farbzahl beträgt 8. Die Chlorzehrung wird zu 112 mg Chlor pro 1 g der 50 %igen Lösung bestimmt.

### Vergleichsbeispiel 2

### Ansatzweise Herstellung von 2-Phosphonobutan-1,2,4-tricarbonsäure nach DE-A 20 61 838

Zu einer Mischung von 508 g (2 Mol) destilliertem Phosphonobernsteinsäuretetramethylester und 172 g (2 Mol) Acrylsäuremethylester werden unter Rühren und intensiver Kühlung bei 12 bis 14°C 64,8 g 25 %ige methanolische Natriumethylatlösung, verdünnt mit 30,5 g Methanol (entspr. 0,3 Mol Natriummethylat in 100 ml Methanol), innerhalb von 70 Minuten zugetropft. Das Methanol wird im Vakuum (16 mbar) bis zu einer Sumpftemperatur von 80°C abdestilliert. Der verbleibende 2-Phosphonobutan-1,2,4-tricarbonsäurepentamethylester wird dann durch 18-stündiges Durchleiten von Wasserdampf bei ca. 120°C Sumpftemperatur verseift.

Ein ³¹P-NMR-Spektrum des Rückstandes zeigt die Signale von Phosphonobernsteinsäure (PBS), 2-Phosphonobutan-1,2,4-tricarbonsäuremonomethylester (MM-PBTC), 2-Phosphonobutan-1,2,4-tricarbonsäure (PBTC) und von Phosphat im Verhältnis folgender Signalintensitäten (Flächen-%).

PBS : MM-PBTC : PBTC : Phosphat = 5,6 : 0,2 : 91,7 : 2,5

Die Gardner-Farbzahl beträgt 1.

Die Chlorzehrung wird zu 100 mg Chlor pro 1 g der 50 %igen Lösung bestimmt.

### Vergleichsbeispiel 3 (entsprechend EP-A 0 358 022)

In einer kontinuierlichen Reaktion werden in einer ersten Stufe 110 g (1,00 Mol) Dimethylphosphit und 150 g (1,04 Mol) Maleinsäuredimethylester mit 2,0 g (0,009 Mol) 25 %iger Lösung von Natriummethylat in Methanol unter gutem Rühren und Kühlen bei 30°C umgesetzt. Die mittlere Verweilzeit beträgt 3 h 15 min.

Dieses Reaktionsgemisch läuft in eine zweite Reaktionsstufe, wo es kontinuierlich mit 88 g (1,02 Mol) Acrylsäuremethylester, 15 g (0,07 Mol) 25 %iger Lösung von Natriummethylat in Methanol und 20 g Methanol unter Rühren und Kühlen bei 10°C zur Reaktion gebracht wird. Die mittlere Verweilzeit beträgt 3 h.

Der so erhaltene Rohester wird bei 100 bis 130°C unter Eigenkatalyse mit einer Verweilzeit von 15 h verseift.

Ein ³¹P-NMR-Spektrum des Rückstandes zeigt die Signale von Phosphonobernsteinsäure (PBS), 2-Phosphonobutan-1,2,4-tricarbonsäuremonomethylester (MM-PBTC), 2-Phosphonobutan-1,2,4-tricarbonsäure (PBTC) und von Phosphat im Verhältnis folgender Signalintensitäten (Flächen-%):

PBS : MM-PBTC : PBTC : Phosphat = 4,0 : 4,8 : 91,0 : 0,2

Die Gardner-Farbzahl beträgt <1.

Die Chlorzehrung wird zu 70 mg Chlor pro 1 g der 50 %igen Lösung bestimmt.

## Patentansprüche

1. Verfahren zur Herstellung von 2-Phosphonobutan-1,2,4-tricarbonsäure oder ihrer Alkalimetallsalze durch Umsetzung von Phosphorigsäuredialkylester mit Ethen-1,2-dicarbonsäuredialkylester, worin die Alkylgruppen in den beiden Stoffgruppen jeweils unabhängig voneinander Methyl- oder Ethylgruppen sind, im Molverhältnis 1:1 bis 1:1,1, bevorzugt 1:1,03 bis 1:1,07, in Gegenwart von 5 bis 50 mmol, bevorzugt 10 bis 40 mmol, Alkalimetallmethylat oder -ethylat jeweils bezogen auf 1 mol eingesetzten Phosphorigsäuredialkylester zu Phosphonobernsteinsäuretetraalkylester und anschließende Umsetzung des so erhaltenen Reaktionsproduktes ohne Aufarbeitungs- oder Reinigungsschritt in einem zweiten Schritt bei Temperaturen von -20°C bis +50°C, vorzugsweise von O°C bis +25°C mit 0,9-1,1 mol, bevorzugt 1-1,07 mol, Acrylsäure-alkylester, worin die Alkylgruppen Methyl- oder Ethylgruppen sind, in Gegenwart von Alkalimetallmethylat oder -ethylat als Katalysator und unter Zusatz von Methanol oder Ethanol zu 2-Phosphonobutan-1,2,4-tricarbonsäurepentaalkylester und Umsetzung des so erhaltenen Reaktionsproduktes ohne weitere Aufarbeitung mittels saurer Hydrolyse, vorzugsweise mit einer durch 2-Phosphonobutan-1,2,4-tricarbonsäure katalysierten Hydrolyse, bei 100 bis 150°C, vorzugsweise bei 105-130°C, dadurch gekennzeichnet, daß der zweite Reaktionsschritt, bestehend in der Umsetzung von Phosphonobernsteinsäuretetraalkylester mit Acrylsäurealkylester, ansatzweise (batchweise) in Gegenwart von 1-2 mol, Methanol oder Ethanol mit einer Verweilzeit von >500 min, ausgeführt wird.

2. Verfahren gemäß Anspruch 1, dadurch gekennzeichnet, daß dieses in Gegenwart von ca. 1,5 mol Methanol oder Ethanol durchgerührt wird.

3. Verfahren gemäß der Ansprüche 1 und 2, dadurch gekennzeichnet, daß dieses mit einer Reaktionszeit > 700 min, durchgeführt wird.

## Claims

1. Process for preparing 2-phosphonobutane-1,2,4-tricarboxylic acid or alkali metal salts thereof by reacting dialkyl phosphite with dialkyl ethene-1,2-dicarboxylate, in which the alkyl groups in the two classes of compounds each independently of one another are methyl or ethyl groups, in a molar ratio of 1:1 to 1:1.1, preferably 1:1.03 to 1:1.07, in the presence of 5 to 50 mmol, preferably 10 to 40 mmol, alkali metal methoxide or alkali metal ethoxide in each case based on 1 mol of dialkyl phosphite used to form tetraalkyl phosphonosuccinate and subsequent reaction of the resultant reaction product without a work-up or purification step in a second step at temperatures of -20°C to +50°C, preferably from 0°C to +25°C with 0.9-1.1 mol, preferably 1-1.07 mol, of alkyl acrylate, in which the alkyl groups are methyl or ethyl groups, in the presence of alkali metal methoxide or alkali metal ethoxide as catalyst and with addition of methanol or ethanol to form pentaalkyl 2-phosphonobutane-1,2,4-tricarboxylate and converting the resultant reaction product without further work-up by means of acid hydrolysis, preferably by a hydrolysis catalysed by 2-phosphonobutane-1,2,4-tricarboxylic acid, at 100 to 150°C, preferably 105-130°C, characterized in that the second reaction step consisting in the reaction of tetraalkyl phosphonosuccinate with alkyl acrylate is carried out batchwise in the presence of 1-2 mol of methanol or ethanol with a residence time of >500 min.

2. Process according to Claim 1, characterized in that this process is carried out in the presence of approximately 1.5 mol of methanol or ethanol.

3. Process according to Claims 1 and 2, characterized in that this process is carried out with a reaction time >700 min.

## Revendications

1. Procédé pour la préparation de l'acide 2-phosphonobutane-1,2,4-tricarboxylique ou de ses sels de métaux alcalins par réaction d'un phosphite de dialkyle avec un éthène-1,2-dicarboxylate de dialkyle dans lesquels les groupes alkyle sont, indépendamment les uns des autres, des groupes méthyle ou éthyle, à un rapport molaire de 1:1 à 1:1,1, de préférence de 1:1,03 à 1:1,07, en présence de 5 à 50 mmol, de préférence de 10 à 40 mmol, d'un méthylate ou éthylate de métal alcalin pour une mole du phosphite de dialkyle mis en oeuvre, la réaction donnant un phosphonosuccinate de tétraalkyle qu'on fait ensuite réagir, sans traitement ni purification préalables, dans un deuxième stade opératoire à des températures de -20 à +50°C, de préférence de 0 à +25°C, avec 0,9 à 1,1 mol, de préférence 1 à 1,07 mol, d'un acrylate d'alkyle dans lequel les groupes alkyle sont des groupes méthyle ou éthyle, en présence d'un méthylate ou éthylate de métal alcalin qui sert de catalyseur et avec adjonction de méthanol ou d'éthanol, la réaction donnant un 2-phosphonobutane-1,2,4-tricarboxylate de pentaalkyle qu'on convertit ensuite, sans traitement préalable particulier, par hydrolyse acide, de préférence par une hydrolyse catalysée par l'acide 2-phosphonobutane-1,2,4-tricarboxylique, à des températures de 100 à 150°C, de préférence de 105 à 130°C, le procédé se caractérisant en ce que le deuxième stade de réaction, à savoir la réaction du phosphonosuccinate de tétraalkyle avec l'acrylate d'alkyle, est réalisé en discontinu (par charges) en présence d'1 à 2 mol de méthanol ou d'éthanol et avec une durée de contact supérieure à 500 min.

2. Procédé selon la revendication 1, caractérisé en ce que l'on opère en présence d'environ 1,5 mol de méthanol ou d'éthanol.

3. Procédé selon les revendications 1 et 2, caractérisé en ce que l'on respecte une durée de réaction supérieure à 700 min.
